(19) Europäisches Patentamt / European Patent Office / Office européen des brevets

(11) **EP 3 809 164 B1**

(12) **FASCICULE DE BREVET EUROPEEN**

(45) Date de publication et mention de la délivrance du brevet:
**27.07.2022 Bulletin 2022/30**

(21) Numéro de dépôt: **20201649.9**

(22) Date de dépôt: **13.10.2020**

(51) Classification Internationale des Brevets (IPC):
**G01T 1/16** *(2006.01)*   **G01T 7/00** *(2006.01)*

(52) Classification Coopérative des Brevets (CPC):
**G01T 7/00; G01T 1/1603**

(54) **PROCÉDÉ DE SUIVI DE LA POSITION D'UNE SOURCE IRRADIANTE**

VERFAHREN ZUR POSITIONSNACHVERFOLGUNG EINER STRAHLUNGSQUELLE

METHOD FOR MONITORING THE POSITION OF AN IRRADIANT SOURCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2019 FR 1911567**

(43) Date de publication de la demande:
**21.04.2021 Bulletin 2021/16**

(73) Titulaire: **Commissariat à l'Energie Atomique et aux Energies Alternatives**
**75015 Paris (FR)**

(72) Inventeur: **MONTEMONT, Guillaume**
**38054 Grenoble Cedex 09 (FR)**

(74) Mandataire: **INNOV-GROUP**
**310, avenue Berthelot**
**69372 Lyon Cedex 08 (FR)**

(56) Documents cités:
**CN-B- 103 163 548**

- **CHEN SI ET AL: "A new compact gamma camera with super resolution capability and high sensitivity for monitoring sparse radioactive sources in large area", 2013 IEEE NUCLEAR SCIENCE SYMPOSIUM AND MEDICAL IMAGING CONFERENCE (2013 NSS/MIC), IEEE, 27 octobre 2013 (2013-10-27), pages 1-4, XP032601486, DOI: 10.1109/NSSMIC.2013.6829418**

## Description

### DOMAINE TECHNIQUE

Le domaine technique de l'invention est la caractérisation de sources irradiantes présentes dans un environnement, notamment dans une installation nucléaire ou une installation comportant des sources irradiantes.

### ART ANTERIEUR

Les gamma caméras sont des dispositifs permettant d'effectuer, à l'aide d'une image, une cartographie de sources irradiantes dans un environnement donné, et en particulier dans les installations nucléaires. Ce type de dispositif a été développé dans les années 1990, et tend à se répandre dans les installations nucléaires, à des fins de caractérisation radiologique. L'objectif est d'identifier les principales sources irradiantes présentes dans une installation. En effet, les sources d'irradiation ne sont pas réparties de façon homogène. Elles sont souvent concentrées localement, sous la forme de "points chauds", terme usuel dans le domaine de la radioprotection. Une gamma caméra présente l'intérêt d'effectuer une localisation, à distance, de ces points chauds.

Les développements et les usages des gamma caméras ont abondamment été décrits dans la littérature. Depuis le début des années 2000, on assiste au développement de gamma caméras spectrométriques. Ces caméras sont basées sur un imageur pixelisé, chaque pixel permettant d'obtenir un spectre de l'irradiation qu'il détecte. Il s'agit d'un gain considérable dans la localisation des sources irradiantes. En effet, la fonction spectrométrique permet de sélectionner des bandes d'énergies d'intérêt, correspondant à des photons non diffusés, c'est-à-dire des photons n'ayant pas été déviés depuis leur émission par la source d'irradiation. La trajectoire des photons non diffusés est rectiligne. Leur sélection, dans des bandes d'énergies prédéterminées, permet d'éliminer un bruit correspondant aux photons diffusés. Ces derniers ayant été déviés depuis leur émission, ils n'apportent pas d'information utile pour localiser les sources irradiantes. La diffusion est donc une source de bruit, que la spectrométrie permet de limiter de façon significative.

Un autre avantage des gamma caméras spectrométriques est que la connaissance de l'énergie des photons permet une identification des isotopes responsables de l'irradiation. Il s'agit d'une information importante dans le domaine de la radioprotection, ou dans la gestion des déchets radioactifs, ou encore dans le démantèlement des installations nucléaires, ou la caractérisation radiologique post accidentelle.

Une contrainte liée à l'utilisation de gamma caméras résulte de l'impossibilité de focaliser des rayons X ou gamma dont l'énergie dépasse plusieurs keV, voire plusieurs centaines de keV. De ce fait, le rendement de collecte des photons X ou gamma est faible. Le rendement de collecte correspond à un nombre de photons atteignant le détecteur normalisé par le nombre de photons émis. Une autre difficulté est le faible rendement de détection des détecteurs sensibles à de telles énergies, en particulier lorsqu'on privilégie le recours à des détecteurs compacts. La conséquence du faible rendement de collecte, combiné à un faible rendement de détection, est qu'il est souvent nécessaire d'acquérir une image selon une durée d'acquisition relativement longue, de façon à augmenter la quantité de photons détectés. Il est ainsi usuel de maintenir une gamma caméra immobile durant plusieurs voire plusieurs dizaines de secondes, de façon à obtenir une statistique de mesure suffisante.

Certains développements ont été réalisés, permettant d'effectuer une reconstruction tridimensionnelle de la position de sources irradiantes. Il s'agit d'appliquer des principes de triangulation, et d'effectuer plusieurs images de mêmes sources irradiantes, en déplaçant la gamma caméra entre l'acquisition des différentes images. Cependant, un tel procédé nécessite des capacités de calcul importantes. De plus, le procédé ne permet pas la prise en compte d'un déplacement de sources irradiantes dans un environnement fixe. Un procédé de formation d'une image de reconstruction selon le préambule de la revendication 1 est connu de CHEN SI ET AL: "A new compact gamma camera with super resolution capability and high sensitivity for monitoring sparse radioactive sources in large area",2013 IEEE NUCLEAR SCIENCE SYMPOSIUM AND MEDICAL IMAGING CONFERENCE (2013 NSS/MIC), IEEE, 27 octobre 2013 (2013-10-27), pages 1-4.

Les inventeurs proposent un procédé simple, peu coûteux en termes de taille mémoire et de capacité de calcul, permettant de prendre en compte un déplacement d'une gamma caméra par rapport à des sources irradiantes fixes, ou un déplacement de sources irradiantes par rapport à une gamma caméra. Le procédé permet d'obtenir une acquisition satisfaisante d'images gamma tout en déplaçant une gamma caméra relativement à une source irradiante ou relativement à une pluralité de sources irradiantes.

### EXPOSE DE L'INVENTION

Un premier objet de l'invention est un procédé de formation d'une image de reconstruction, l'image de reconstruction montrant une position de sources irradiantes dans un champ d'observation, le procédé mettant en oeuvre un dispositif comportant une gamma caméra, reliée à une caméra visible, le dispositif étant tel que :

- la gamma caméra et la caméra visible définissent le champ d'observation;
- la caméra visible est configurée pour former une image visible du champ d'observation;
- la gamma caméra comporte des pixels, configurés pour détecter un rayonnement électromagnétique ionisant généré par une source irradiante éventuellement présente dans le champ d'observation, les pixels s'étendant selon un plan de détection ;

- la gamma caméra est configurée pour former une image gamma, permettant d'estimer une position de sources irradiantes, dont le rayonnement est détecté par des pixels, dans le champ d'observation;

le procédé comportant les étapes itératives suivantes :

a) à un instant de mesure initial, acquisition d'une image gamma initiale par la gamma caméra et acquisition d'une image visible initiale par la caméra visible;

b) à partir de l'image gamma initiale et de l'image visible initiale, initialisation de l'image de reconstruction;

c) acquisition d'une image gamma par la gamma caméra et acquisition d'une image visible par la caméra visible à un instant de mesure;

d) comparaison de l'image visible à l'instant de mesure avec une image visible à un instant antérieur, l'instant antérieur étant l'instant de mesure initial ou un précédent instant de mesure, puis, en fonction de la comparaison, estimation d'un champ de déplacements entre les images visibles respectivement acquises à l'instant antérieur et à l'instant de mesure ;

e) mise à jour de l'image de reconstruction, en fonction :

- d'une image de reconstruction établie à l'instant antérieur;
- du champ de déplacements résultant de l'étape d) ;
- et de l'image gamma acquise à l'instant de mesure ;

f) éventuellement superposition de l'image de reconstruction, ou d'une partie de l'image de reconstruction, et de l'image visible ;

g) réitération des étapes c) à f) en incrémentant l'instant de mesure, jusqu'à un arrêt des itérations ;

le dispositif étant déplacé entre au moins deux instants de mesure, de telle sorte qu'à chaque instant de mesure correspond un champ d'observation.

Ainsi, l'image de reconstruction montre une position des sources irradiantes dans le champ d'observation. Selon un mode de réalisation, l'image de reconstruction, à un instant de mesure, n'est définie que dans le champ d'observation correspondant à l'instant de mesure.

De préférence, entre au moins deux instants de mesure, le dispositif est déplacé, de façon que les champs d'observation respectivement avant et après le déplacement comportent une partie commune.

La gamma caméra définit un champ d'observation gamma. La caméra visible définit un champ d'observation visible. Le champ d'observation du dispositif correspond à une intersection du champ d'observation gamma et du champ d'observation visible.

Une image gamma permet une localisation de sources gamma éventuellement présentes dans le champ d'observation gamma.

Selon un mode préféré de réalisation, à chaque instant de mesure, chaque pixel ayant détecté un rayonnement issu d'une source irradiante est associé à une position dans une surface objet, s'étendant face au plan de détection, l'image de reconstruction correspondant à une distribution spatiale des sources irradiantes à l'intérieur du champ d'observation, à l'instant de mesure, sur la surface objet. La surface objet peut avantageusement être un plan objet, s'étendant parallèlement au plan de détection, chaque position étant coplanaire.

Selon ce mode de réalisation, l'image de reconstruction, à l'instant de mesure, est définie dans une intersection entre le champ d'observation à l'instant de mesure et la surface objet. L'image de reconstruction, à l'instant de mesure, peut n'être définie que dans une intersection entre le champ d'observation à l'instant de mesure et la surface objet.

L'étape e) peut comporter :

- i) estimation d'une image de reconstruction, à l'instant de mesure, à partir de l'image de reconstruction établie à l'instant antérieur et du champ de déplacements résultant de l'étape d) ;
- ii) à partir de l'image de reconstruction estimée, estimation de l'image gamma à l'instant de mesure ;
- iii) comparaison de l'image gamma estimée à l'instant de mesure et l'image gamma acquise à l'instant de mesure ;
- iv) en fonction de la comparaison, mise à jour de l'image de reconstruction à l'instant de mesure.

Le procédé peut comporter une détermination d'une fonction de recalage, représentative d'un décalage spatial entre la caméra gamma et la caméra visible, la fonction de recalage étant utilisée dans l'étape e). La fonction de recalage permet de définir un champ de déplacement de l'image gamma à partir du champ de déplacements résultant de l'étape d). Cela permet d'obtenir un déplacement de deux images gamma, respectivement acquises à l'instant antérieur et à l'instant de mesure, à partir du déplacement établi pour deux images visibles auxdits instants.

L'étape d) peut comporter une sélection de points remarquables sur les images visibles acquises respectivement à l'instant antérieur et à l'instant de mesure, le champ de déplacements comportant un déplacement bidimensionnel des points remarquables sélectionnés.

Les points remarquables sont de préférence considérés comme appartenant à une même surface, voire à un même plan. Il peut notamment s'agir de la surface objet ou du plan objet ou d'un plan parallèle au plan objet.

Le procédé peut être tel que l'étape d) comporte, à chaque instant de mesure :

- une extraction de premiers points remarquables de l'image visible acquise à l'instant de mesure ;
- une extraction de deuxièmes points remarquables de l'image visible acquise à l'instant antérieur ;
- un appariement de premiers points remarquables et des deuxièmes points remarquables, de façon à former des couples de points appariés, chaque couple étant formé d'un premier point remarquable et d'un deuxième point remarquable ;
- pour chaque couple de points appariés, détermination d'un déplacement ;
- obtention du champ de déplacements à partir des déplacements déterminés pour chaque couple de points appariés.

Le procédé peut comporter :

- une élaboration d'un premier maillage du champ d'observation, à l'instant de mesure, à l'aide de premiers points remarquables, ces derniers formant des premiers sommets du premier maillage;
- une élaboration d'un deuxième maillage du champ d'observation, à l'instant antérieur à l'aide de deuxièmes points remarquables, ces derniers formant des deuxièmes sommets du deuxième maillage ;
- en fonction des déplacements déterminés pour différents couples de points remarquable, détermination, par interpolation, de déplacements en des points appartenant au premier maillage et au deuxième maillage.
- détermination du champ de déplacements à partir du déplacement de chaque sommet apparié et des déplacements interpolés.

Selon un mode de réalisation :

- le dispositif est couplé à un capteur de mouvement, de façon à estimer un mouvement du dispositif entre deux instants successifs ;
- l'étape d) prend en compte le mouvement estimé pour estimer ou valider le champ de déplacements.

Un aspect de l'invention est que le champ de déplacement, établi à l'aide des images visibles, est considéré comme représentatif du déplacement des sources irradiantes entre deux instants de mesure, à la fonction de recalage près.

Selon un mode de réalisation, la gamma caméra est configurée pour acquérir, lors des étapes a) et c) des images gamma simultanément dans différentes bandes d'énergies, les étapes b) et d) à f) étant mises en oeuvre dans chaque bande d'énergie respectivement, de façon à obtenir, à chaque instant de mesure, une image de reconstruction dans différentes bandes d'énergie. Selon un mode de réalisation, la gamma caméra est configurée pour acquérir, lors des étapes a) et c) des images gamma simultanément dans différentes bandes d'énergies, le procédé comportant une combinaison linéaire de différentes images gamma respectivement acquises, au même instant de mesure, dans différentes bandes d'énergie, de façon à obtenir une image gamma combinée, les étapes b) et d) à f) étant mises en oeuvre à partir d'une image gamma combinée formée à chaque instant de mesure. L'image combinée peut être formée par une somme pondérée d'images gamma acquises dans différentes énergies, la somme pondérée utilisant des facteurs de pondération, les facteurs de pondération étant déterminé à partir d'un spectre d'émission d'un isotope radioactif, de telle sorte que chaque image de reconstruction est représentative d'une distribution spatiale de l'activité de l'isotope dans le champ d'observation correspondant à l'instant de mesure.

Un autre objet de l'invention est un dispositif comportant :

- une gamma caméra, comportant des pixels, définissant un champ d'observation gamma, la gamma caméra étant configurée pour déterminer une position de sources irradiantes X ou gamma dans le champ d'observation gamma;
- une caméra visible, permettant de former une image visible d'un champ d'observation visible ;
- l'intersection du champ d'observation gamma et du champ d'observation visible étant non nulle, et définissant un champ d'observation du dispositif ;
- une unité de traitement d'image, configurée pour recevoir, en différents instants de mesure :

  • une image gamma, formée par la gamma caméra ;
  • une image visible formée par la caméra visible ;

l'unité de traitement étant configurée pour mettre en oeuvre les étapes b) ainsi que d) à g) d'un procédé selon le premier objet de l'invention.

L'invention sera mieux comprise à la lecture de l'exposé des exemples de réalisation présentés, dans la suite de la description, en lien avec les figures listées ci-dessous.

## FIGURES

La figure 1A schématise un dispositif de mesure disposé face à des éléments structurels et à des sources irradiantes.
Les figures 1B et 1C représentent respectivement des images gamma et visible acquise à un instant de mesure.

La figure 2A schématise un dispositif de mesure disposé face à des éléments structurels et à des sources irradiantes, à un autre instant de mesure.

Les figures 2B et 2C représentent respectivement des images gamma et visible acquise à l'autre instant de mesure.

La figure 3 schématise le plan objet par rapport à la gamma caméra.

La figure 4 montre les principales étapes d'un procédé d'obtention d'une image de reconstruction.

## EXPOSE DE MODES DE REALISATION PARTICULIERS

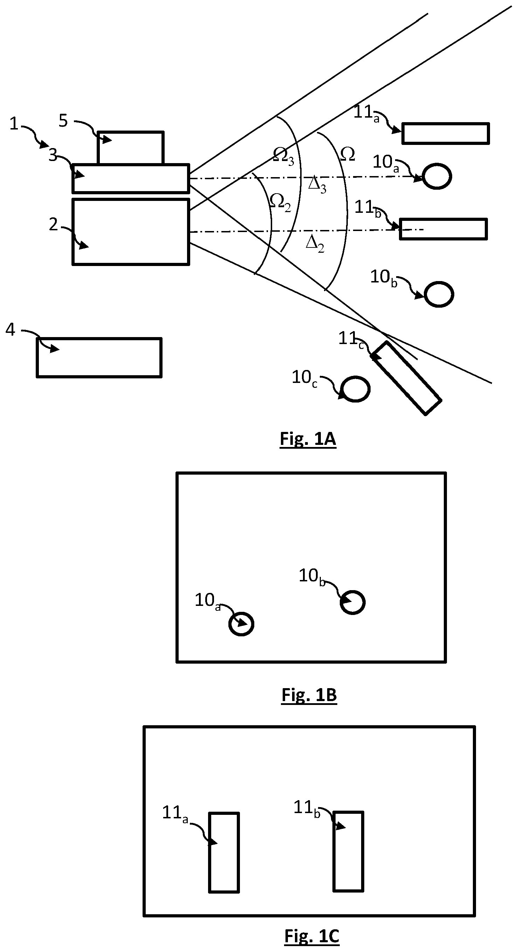

La figure 1A représente un dispositif de mesure 1 permettant une mise en oeuvre de l'invention. Le dispositif de mesure comporte un imageur gamma 2, ou gamma caméra. L'imageur gamma est configuré pour détecter des rayons électromagnétiques ionisants, de type X ou gamma, dont l'énergie est généralement comprise entre 10 keV et 10 MeV. L'imageur gamma comporte des pixels, chaque pixel correspondant à une zone spatiale élémentaire du champ d'observation. Les pixels s'étendent selon un plan de détection P. Lorsque la zone spatiale élémentaire correspondant à un pixel comporte une source émettrice de rayonnement X ou gamma, une partie du rayonnement émis par la source atteint le pixel et est détecté par ce dernier. Ainsi, un pixel de l'image gamma comporte d'autant plus de signal que la zone spatiale élémentaire à laquelle il est associé est irradiante, c'est-à-dire émettrice d'un rayonnement X ou gamma. Dans la suite de la description, les exemples sont donnés en lien avec des sources d'irradiation gamma, ce qui correspond au cas d'application le plus fréquent. Il est directement transposable à des sources d'irradiation X.

L'imageur gamma peut être de type gamma caméra Compton, gamma caméra à collimateur sténopé ou gamma caméra à masque codé. Il peut également s'agir, de façon non exhaustive, d'une gamma caméra dont le collimateur comporte des canaux parallèles, ou des canaux convergents, ou des canaux divergents. Aussi, le terme gamma caméra correspond à un imageur présentant un champ d'observation et configuré pour former une image permettant une localisation de sources d'irradiation dans le champ d'irradiation. Quel que soit le type d'imageur gamma, il permet une formation d'une image gamma comportant des pixels, chaque pixel correspondant à une zone spatiale élémentaire de l'environnement observé. Certains imageurs gamma ont une fonction spectrométrique, au sens où ils permettent une séparation spectrale des rayonnements détectés en différentes bandes spectrales. Lorsqu'on utilise ce type d'imageur, il est possible de former différentes images gamma d'un même champ d'observation, à chaque image correspondant une bande spectrale. L'image peut également être établie en considérant une combinaison de bandes spectrales, qui correspondent au spectre d'émission d'un isotope. La combinaison peut être une somme pondérée. L'image est alors représentative d'une distribution spatiale de l'activité de l'isotope considéré.

Dans certains imageurs gamma, en particulier les gamma caméra Compton ou les gamma caméras à masques codés, l'image acquise par l'imageur ne permet pas une représentation directe des sources émettrices dans le champ d'observation. L'image acquise subit un traitement, prenant en compte une fonction de réponse de la caméra, de façon à permettre d'obtenir une image gamma sur laquelle l'intensité de chaque pixel correspond à l'intensité d'émission de la zone spatiale élémentaire du champ d'observation associée au pixel.

Il est usuel que les gamma caméras soient associées à des caméras visibles. Il s'agit de caméras standard, permettant de former une image visible du champ d'observation. Le dispositif représenté sur la figure 1A comporte une caméra visible 3, solidaire de la gamma caméra 2. La caméra visible 3 et la gamma caméra 2 présentent chacune un champ d'observation, s'étendant autour de leurs axes optiques respectif. Sur la figure 1A, les axes optiques et champs d'observation de la gamma caméra 2 et de la caméra visible 3 sont notés $\Omega_2$, $\Delta_2$, $\Omega_3$ et $\Delta_3$. Généralement, le champ d'observation visible est plus large que le champ d'observation gamma. Les champs d'observation visible et gamma se recoupent : leur intersection est non nulle. Elle est aussi large que possible.

La caméra visible 3 est usuellement disposée à faible distance de la gamma caméra, de telle sorte que leurs axes optiques respectifs sont rapprochés, et de préférence parallèles l'un par rapport à l'autre. Ainsi, au-delà d'une certaine distance, généralement inférieure à 1 m, voire à 50 cm, le champ d'observation de la gamma caméra est inclus dans le champ d'observation de la caméra visible. L'intersection des deux champs d'observation forme le champ d'observation $\Omega$ du dispositif.

De préférence, les axes optiques de la gamma caméra 2 et de la caméra visible 3 sont alignés. La gamma caméra et la caméra visible ont fait l'objet d'une calibration, pour corriger une erreur de parallaxe due au décalage des deux axes optiques, ainsi que pour prendre en compte des distorsions géométriques dues aux lentilles de la caméra visible, en particulier en bordure de champ. La calibration prend également en compte une différence du nombre et de la taille de pixels entre la caméra visible et la gamma caméra. La calibration permet une définition d'une fonction de recalage $\mathcal{G}$.

Une unité de traitement 4 reçoit les images générées par la gamma caméra 2 et la caméra visible 3. L'unité de traitement d'images est notamment configurée pour fusionner les images résultant de la caméra visible 3 et les images provenant de la gamma caméra 2, en prenant notamment en compte la fonction de recalage. L'objectif est d'obtenir une image composite correspondant à l'image visible, sur laquelle apparaissent les sources irradiantes détectées par la gamma caméra. L'unité de traitement 4 est reliée à une mémoire dans laquelle les instructions de traitement d'image sont codées. L'unité de traitement 4 comporte un processeur, par exemple un microprocesseur, configuré pour mettre en oeuvre des instructions correspondant aux étapes décrites ci-après.

Comme évoqué en lien avec l'art antérieur, la durée d'acquisition d'une image gamma est généralement de plusieurs secondes, voire plusieurs dizaines de secondes. Cela est dû au faible rendement de collecte combiné au faible rendement de détection.

Sur la figure 1A ont été représentées des sources irradiantes $10_a$, $10_b$ et $10_c$, émettrices de rayonnement y, ainsi que des éléments structurels $11_a$, $11_b$ et $11_c$ schématisant l'environnement visible autour des sources irradiantes. Le dispositif 1 occupe une position ainsi qu'une orientation dans l'environnement observé. La figure 1B schématise une image gamma obtenue par la gamma caméra. Sur cette dernière, à titre illustratif, les sources irradiantes $10_a$ et $10_b$, présentes dans le champ d'observation, apparaissent sous la forme de cercles. La figure 1C schématise une image visible obtenue par la caméra visible, et permettant d'observer des objets présents dans le champ d'observation. Le terme objet correspond à des éléments structurels présents dans le champ d'observation. Il peut s'agir de parties de génie-civil (parois, portes, fenêtres, arêtes), et/ou de parties d'installations industrielles (tuyaux, équipements spécifiques), et/ou d'objets mobiliers (table, chaise, coffre, équipements divers).

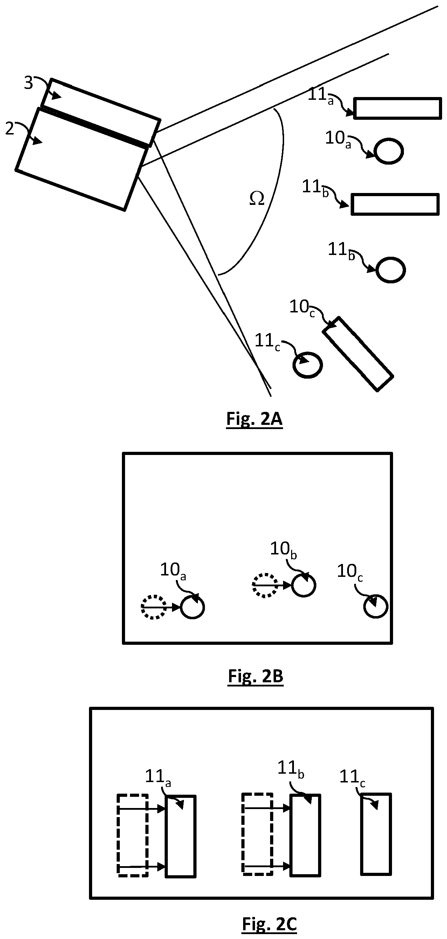

Sur la figure 2A, on a représenté le dispositif, dans le même environnement, selon une position et une orientation différente de celles représentées sur la figure 1A. Généralement, du fait de la sensibilité de la gamma caméra, plusieurs secondes, voire minutes, d'acquisition sont nécessaires de façon à obtenir une représentation de chaque source irradiante selon un rapport signal sur bruit suffisant. Durant l'acquisition d'une image gamma, la gamma caméra doit de préférence être maintenue immobile.

La figure 2B montre une image gamma obtenue. Les contours en traits pleins montrent les sources irradiantes $10_a$, $10_b$ et $10_c$. Sur cette image, les pointillés représentent les positions des sources irradiantes $10_a$ et $10_b$ telles qu'elles apparaissent sur la figure 2B. Sur l'image gamma, le changement d'orientation de la gamma caméra entre les figures 2A et 2B se traduit par un déplacement des sources irradiantes, ce dernier étant illustré par deux flèches. Il est possible de prendre en compte un environnement, dans lequel chaque source irradiante détectée par la gamma caméra présente une position fixe, matérialisée par des coordonnées bidimensionnelles dans un espace objet. Lorsque la gamma caméra est déplacée dans l'espace objet, les sources gamma présentes dans le champ d'observation sont détectées et produisent un signal exploitable sur l'image gamma. Généralement, le signal formé sur l'image gamma présente un rapport signal sur bruit relativement faible, ce dernier dépendant du niveau d'irradiation produit par la source sur la gamma caméra. Afin d'améliorer le rapport signal sur bruit, le signal produit par une source irradiante sur une gamma caméra peut être accumulé, par exemple par une moyenne glissante. Ainsi, à chaque fois qu'une source gamma est présente dans le champ d'observation, le signal qu'elle génère sur l'image gamma est pris en compte, de façon à améliorer la statistique de détection liée à la source. L'image gamma est alors intégrée à un procédé de reconstruction, prenant en compte des images gamma acquises préalablement et/ou postérieurement.

A chaque acquisition d'une image gamma est associée une image visible acquise par la caméra visible. La caméra visible 3 acquiert une image visible de la scène observée. Le champ d'observation $\Omega$ du dispositif d'imagerie, c'est-à-dire à l'intersection des champs d'observation respectifs de la gamma caméra et de la caméra visible, définit un espace objet. L'espace objet comporte des points $(x,y)$, chaque point étant associé à un pixel $(u,v)$ de l'image gamma. Les pixels appartiennent à un plan de détection P, dans lequel est formée l'image gamma. Les points $(x,y)$ du champ d'observation ont des coordonnées bidimensionnelles, et correspondent à des pixels de l'image visible, après prise en compte de la fonction de recalage.

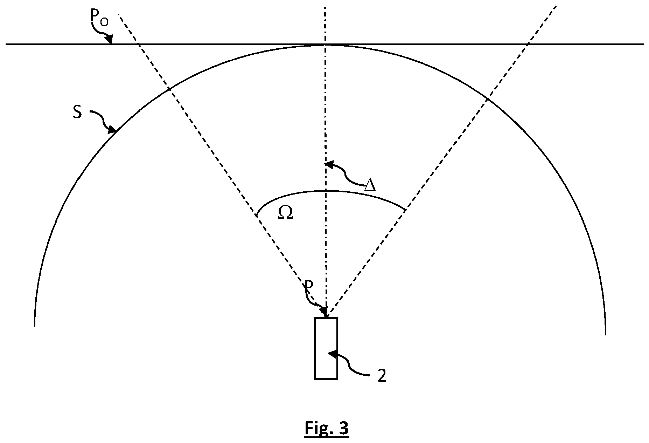

Un élément important de l'invention est que les points du repère objet sont considérés comme appartenant à un même plan de projection objet $P_o$. Le champ d'observation angulaire $\Omega_2$ de la gamma caméra, s'étendant autour de l'axe optique $\Delta_2$ décrit une portion d'une sphère S, représentée sur la figure 3. Le plan objet $P_o$ correspond à un plan, tangent à la sphère S, et perpendiculaire à l'axe optique $\Delta_2$. Les sources irradiantes présentes dans le champ d'observation sont considérées comme coplanaires et appartenant au plan objet. La distance entre le plan de détection et le plan objet est une distance arbitraire, qui peut ne pas être connue. Elle n'est pas prise en compte dans le procédé de reconstruction décrit ci-après. Selon une variante, les sources irradiantes sont considérées comme appartenant à une même surface tridimensionnelle, s'étendant face au plan de détection P.

Après un traitement d'image, permettant d'effectuer une fusion d'image (seuillage et/ou superposition avec prise en compte d'une transparence), et de prendre en compte de la fonction de recalage, les niveaux d'irradiation associés aux points du repère objet, et considérés comme significatifs, sont superposés à l'image visible $V_k$ sous la forme d'un code couleur.

Ainsi, le champ d'observation $\Omega$ du dispositif délimite une partie du plan objet, dans laquelle la reconstruction est effectuée.

La correspondance entre chaque point $(x, y)$ du plan objet $P_o$ et de chaque pixel $(u, v)$ de l'image gamma dépend d'une fonction de réponse spatiale de la gamma caméra. Lorsque des photons gamma sont émis en un point du repère objet $(x,y)$, vers la gamma caméra, la trace qu'ils forment sur l'image gamma résulte d'une fonction de réponse spatiale F de la caméra. Lorsqu'on met en œuvre une gamma caméra basée sur un collimateur de type sténopé, la fonction de réponse spatiale prend en compte l'ouverture du sténopé. Elle peut être approximée par une image d'une source irradiante centrée dans le champ d'observation, qui est utilisée en tant que réponse impulsionnelle. Lorsqu'on met en oeuvre une gamma caméra à masque codé, la fonction de réponse prend en compte la géométrie du masque. Lorsqu'on met en œuvre une gamma caméra Compton, la fonction de réponse dépend de l'énergie détectée et de la position des pixels ayant détecté un rayonnement, dans le plan de détection P. Ainsi, dans une gamma caméra Compton, la fonction de réponse peut varier à chaque instant de mesure.

La correspondance entre un point du champ d'observation et un pixel de l'image gamma peut par exemple être réalisée par un produit de convolution de l'image gamma par la fonction de réponse (notamment dans le cas d'une gamma caméra dotée d'un collimateur sténopé), ou par une projection rectilinéaire (notamment dans le cas d'une gamma caméra dotée d'un collimateur à masque codé). La projection peut également être d'un autre type, par exemple, et à titre non limitatif, stéréographique, ou orthographique.

Ainsi, la fonction ,de réponse F permet de passer du plan de détection, dans lequel l'image gamma est acquise, au plan objet $P_o$, correspondant à la scène observée, et dans lequel la position de sources irradiantes est recherchée. Dans la suite de la description, la notation F correspond à une projection d'une image formée dans le plan objet vers le plan de détection. La notation $F^-$ correspond à une rétroprojection d'une image formée dans le plan de détection P vers le plan objet $P_o$. Dans une première approche, F est un opérateur linéaire et $F^-$ correspond à une transposée de F.

Si $M_k$ est une image gamma acquise à un instant $t_k$, et $I_k$ est une image montrant une reconstruction des sources d'irradiation dans le champ $\Omega_k$ observé à l'instant $t_k$, on a :

$$I_k(x, y) = F^-[M_k(u, v)] \quad (1)$$

où :

- $(x,y)$ représentent des coordonnées, dans le plan objet, parallèle au plan de détection, et correspondant à des coordonnées $(u, v)$ dans plan de détection ;
- $I_k(x,y)$ correspond à une image de la répartition de sources irradiantes dans le champ d'observation. Il s'agit d'une matrice bidimensionnelle dont chaque terme représente un taux d'émission, dans une bande spectrale, ou dans plusieurs bandes spectrales combinées, d'une source irradiante dans le plan objet, en des coordonnées (x,y), à l'instant de mesure $t_k$. Comme précédemment décrit, lorsque plusieurs bandes spectrales en fonction du spectre d'émission d'un isotope, l'image $I_k$ est représentative d'une distribution spatiale de l'activité de l'isotope. D'une façon générale, $I_k$ correspond à l'estimation de la répartition de l'irradiation après prise en compte d'au moins une image gamma acquise par la gamma caméra. Chaque terme de l'image $I_k(x,y)$ correspond à une estimation d'un taux d'émission de photons gamma (ou X), ou d'une activité, au point $(x,y)$ du plan objet. La dimension de l'image $I_k$ est Nx, Ny, où Nx et Ny désignent le nombre de pixels de la gamma caméra respectivement selon un axe horizontal et un axe vertical. La dimension de la matrice $I_k$ est identique à celle d'une image gamma acquise par la gamma caméra.

- $F^-$ est un opérateur de rétroprojection, permettant un passage dans le plan objet $P_o$ à partir du plan de détection P.

Le fait de représenter la position des sources irradiantes selon une distribution spatiale (ou carte) bidimensionnelle permet une superposition simple de l'image de reconstruction sur une image visible acquise par la caméra visible.

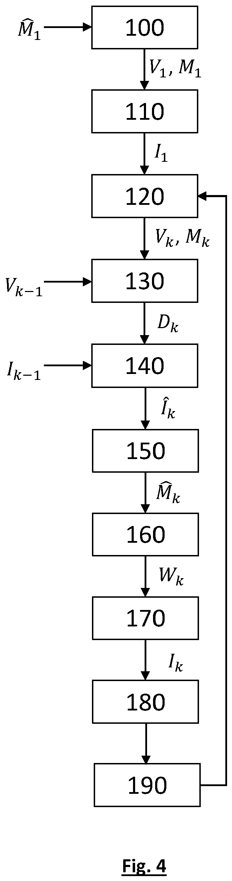

Le procédé, dont les principales étapes sont schématisées sur la figure 4, permet d'établir une localisation de sources gamma dans un environnement, tout en permettant un déplacement relatif du dispositif de mesure 1 par rapport aux sources irradiantes. D'une façon générale, le dispositif 1 est déplacé par rapport à l'environnement et au cours du déplacement, plusieurs acquisitions d'images gamma sont réalisées. Entre deux acquisitions successives, le déplacement relatif du repère objet par rapport au dispositif 1 est enregistré. L'objectif est de permettre un suivi, dans le plan objet, de la position de sources irradiantes se déplaçant par rapport au dispositif de mesure 1. Le déplacement relatif peut être un déplacement du dispositif de mesure par rapport à une source irradiante, cette dernière étant fixe dans l'environnement. Il peut également s'agir d'un déplacement de la source irradiante par rapport au dispositif de mesure, ce dernier étant fixe dans l'environnement.

Etape 100 : Initialisation

Au cours d'une première acquisition, le dispositif de mesure 1 est disposé selon une première position, à un premier instant $t_1$. Une acquisition d'une image gamma $M_1$ est réalisée. D'une façon générale, la durée de chaque acquisition d'image gamma est comprise entre 1 ms et 5 s, et de préférence comprise entre 50 ms et 500 ms, par exemple 100 ms. Sur l'image gamma, chaque source irradiante présente dans le champ apparaît sous la forme d'une trace, dont l'intensité dépend de l'irradiation, générée par la source irradiante, et détectée par la gamma caméra.

Lorsque la gamma caméra dispose d'une fonction spectrométrique, une image gamma est acquise dans une bande spectrale d'énergie ΔE donnée, ou dans une combinaison de bandes d'énergie, comme précédemment décrit.

Une image visible $V_1$ est acquise au premier instant $t_1$, ou à un instant considéré comme consécutif du premier instant $t_1$. Le principal objectif de l'image visible initiale $V_1$ est d'obtenir des points remarquables sur la scène visible observée. Les points remarquables, et leur utilisation, sont plus largement décrits dans l'étape 130.

L'image gamma $M_1$ est divisée par une image d'estimation $\hat{M}_1$. L'image d'estimation $\hat{M}_1$ correspond à une estimation de l'image gamma $M_1$. Lors de la première acquisition, l'image d'estimation $\hat{M}_1$ est établie a priori. Elle est par exemple uniforme et constituée de 1.

$$U_1 = \frac{M_1}{\hat{M}_1}$$

Le ratio correspond à un terme d'erreur de la mesure par rapport à l'estimation. Le ratio $U_1$ est calculé terme à terme, pour chaque pixel $(u, v)$ de l'image gamma $M_1$ et de son estimée $\hat{M}_1$.

Etape 110 : Rétro propagation de l'erreur et mise à jour de la reconstruction

Le terme d'erreur $U_1$ est propagé dans le plan objet, de façon à effectuer une mise à jour d'une image de reconstruction $I_1$ de telle sorte que :

$$W_1(x, y) = F^-[U_1(u, v)] \quad (2)$$

et

$$I_1(x, y) = I_0(x, y) \times W_1(x, y) \quad (3)$$

L'image $I_0(x,y)$ est une image d'initialisation, déterminée a priori, ne comportant par exemple que des réels positifs, par exemple que des 1.

Suite aux étapes 100 à 110, les étapes 120 à 190 sont mises en oeuvre de façon itérative. A chaque itération correspond un rang d'itération $k$. $k$ est un entier compris entre 2 et K. K correspond au rang d'itération lors de l'arrêt des itérations.

Etape 120 : Acquisition d'une image gamma $M_k$ et d'une image visible $V_k$ à un instant $t_k$.

Une image visible $V_k$ est acquise au cours d'un instant $t_k$. Une image gamma $M_k$ est également acquise à l'instant $t_k$, ou à un instant d'acquisition considéré comme simultané de l'instant $t_k$. De préférence, les durées d'acquisition de chaque image gamma $M_k$ sont identiques à chaque itération $k$.

Etape 130 : Estimation d'un champ de déplacements $D_k$

L'objectif de cette étape est de former un champ de déplacements $D_k$ représentatif d'un déplacement bidimensionnel de l'image visible $V_{k-1}$ par rapport à l'image visible $V_k$. L'image $V_{k-1}$ est une image visible acquise au cours d'une itération précédente ou, lorsque $k = 2$, au cours de l'étape 100. Le champ de déplacements $D_k$ comporte, en différentes coordonnées $(x, y)$ du plan objet, un vecteur de déplacement $d_k$, correspondant à un déplacement selon l'axe X et un déplacement selon l'axe Y. Chaque vecteur de déplacement est un vecteur de dimension égale à 2. Ainsi, on ne prend en compte qu'un déplacement bidimensionnel, dans un plan parallèle au plan objet $P_o$, ou confondu avec ce dernier.

Le dispositif 1 peut avoir été déplacé ou réorienté entre les acquisitions des images $V_{k-1}$ et $V_k$. De façon alternative, certains éléments de l'espace objet peuvent avoir été déplacés entre les deux acquisitions. C'est notamment le cas lorsqu'une source irradiante se déplace dans le repère objet.

Sur chaque image $V_{k-1}$ et $V_k$, on identifie des points remarquables. Les points remarquables sont des points aisément identifiables par un traitement d'image classique. Il s'agit par exemple de points formant un contour ou une arête d'un objet, ou de points particulièrement contrastés du point de vue de l'intensité ou de la couleur. Ainsi, un point remarquable peut être un point correspondant à un Laplacien ou gradient d'intensité élevé.

Le nombre de points remarquables détectés sur chaque image $V_{k-1}$ et $V_k$ est de préférence compris entre quelques dizaines et plusieurs centaines voire plus de 1000. Les points remarquables détectés sur les deux images $V_{k-1}$ et $V_k$ forment respectivement un ensemble $E_{k-1}$ et un ensemble $E_k$.

La détection des points remarquables sur une image peut être effectuée en mettant en oeuvre un algorithme, par exemple un détecteur de coins de Harris. Suite à leur détection, les points remarquables sont caractérisés, de façon à pouvoir permettre leur éventuelle identification sur les deux images $V_{k-1}$ et $V_k$. La caractérisation vise à caractériser chaque point remarquable et son environnement. Cela peut être effectué en mettant en oeuvre des algorithmes de description locale, connus de l'homme du métier, de type DAISY ou LUCID ou FREAK. De tels algorithmes sont usuellement désignés "feature description algorithms". A chaque point remarquable est associé un vecteur descripteur, permettant de le reconnaître sur les deux images $V_{k-1}$ et $V_k$.

Sur la base de leur description et de leur caractérisation, les points remarquables identifiés sur les images $V_{k-1}$ et $V_k$ font l'objet d'un appariement, de façon à établir des couples de points remarquables, chaque couple reliant un point remarquable de l'image $V_{k-1}$ et un point remarquable de l'image $V_k$, les points remarquables appariés présentant un vecteur descripteur considéré comme identique Les points remarquables appariés correspondent à un même point de la scène observée, et apparaissant sur les deux images visibles $V_{k-1}$ et $V_k$. L'appariement est une opération usuellement désignée par le terme "Matching".

De préférence, les points remarquables de chaque image sont considérés comme coplanaires : ils s'étendent selon un plan parallèle au plan objet.

A partir des points remarquables appariés, on effectue un maillage des images $V_{k-1}$ et $V_k$, respectivement à partir des ensembles $E_{k-1}$ et $E_k$. Il peut s'agir d'un maillage de Delaunay, définissant des mailles triangulaires, chaque maille s'étendant entre trois points remarquables différents les uns des autres, et appariés sur les deux images $V_{k-1}$ et $V_k$. Pour chaque sommet du maillage, présent dans les deux images $V_{k-1}$ et $V_k$, un déplacement bidimensionnel $d_k$ est estimé. Pour une mise en oeuvre optimale de l'invention, il est préférable que le déplacement du dispositif, ou des éléments constituant le repère objet, se déplacent relativement lentement, de façon à maximiser le nombre de sommets du maillage présents dans les deux images $V_{k-1}$ et $V_k$. Un déplacement suffisamment lent et fluide et une luminosité suffisante permet également d'éviter un effet de flou ou de bougé dans l'image visible. De préférence, les champs d'observation avant et après un déplacement se recoupent à au moins 50%, voire au moins 80%, voire 90%.

On dispose alors, en chaque sommet du maillage présent dans les deux images $V_{k-1}$ et $V_k$, d'une estimation d'un vecteur de déplacement $d_k$. Le vecteur déplacement n'étant défini qu'au niveau des sommets présents dans les images $V_{k-1}$ et $V_k$, une interpolation, par exemple une interpolation linéaire, est effectuée, de façon à obtenir une estimation d'un déplacement $d_k$ dans chaque point $(x, y)$ du champ d'observation $\Omega_k$ du dispositif, au moins à l'intérieur du maillage. Plus précisément, le déplacement est déterminé, au moins dans un maillage établi dans l'intersection des champs d'observation $\Omega_{k-1}$ et $\Omega_k$ correspondant respectivement aux images visibles $V_{k-1}$ et $V_k$ respectivement acquises aux instants de mesure k-1 et k. On forme alors le champ de déplacements $D_k$, dont chaque terme correspond au vecteur de déplacement $d_k(x, y)$ déterminé, au moins en chaque point $(x, y)$ inclus dans le maillage.

Le champ de déplacements $D_k$, à l'extérieur du maillage, peut être estimé par extrapolation, à partir des vecteurs de déplacement $d_k(x, y)$ établis à l'intérieur du maillage. Cela permet d'obtenir un vecteur champ de déplacements $D_k$ dans tout le champ d'observation de l'image. Dans un mode de réalisation, le dispositif comporte un capteur de mouvement 5, permettant d'estimer un mouvement angulaire du dispositif entre les acquisitions des images visibles $V_{k-1}$ et $V_k$. Le capteur de mouvement peut être une centrale magnéto-inertielle, ou comporter au moins un gyromètre. Dans ce cas, le champ de déplacements, à l'extérieur du maillage, peut être estimé en combinant le champ de déplacement obtenu à l'intérieur du maillage avec le mouvement du dispositif entre les deux images.

D'autres méthodes permettent d'estimer un champ de déplacements $D_k$ entre deux images successives. Il peut par exemple s'agir de méthodes usuellement désignées par le terme "Optical Flow", qui permettent d'estimer un faible déplacement entre deux images successives.

Le champ de déplacements $D_k$ est déterminé, au moins en partie, par l'observation d'un déplacement d'objets présents dans les images visibles $V_{k-1}$ et $V_k$. Selon une première possibilité, les objets sont fixes dans la scène observée : le champ de déplacements est établi en observant un déplacement d'objets, ou de parties d'objets, présents dans les deux images $V_{k-1}$ et $V_k$. Dans ce cas, le champ de déplacements correspond au déplacement de la caméra par rapport aux objets présents dans le champ d'observation de cette dernière. Selon une deuxième possibilité, les objets sont mobiles alors que le dispositif n'a pas été déplacé entre l'acquisition des images $V_{k-1}$ et $V_k$. Dans ce cas, le champ de déplacements $D_k$ correspond au déplacement des objets relativement à la caméra visible. D'une façon plus générale, le champ de déplacements $D_k$ correspond au déplacement relatif d'objets, présents dans le champ d'observation de la caméra visible, relativement à cette dernière.

Lorsqu'il n'est pas possible de déterminer le champ de déplacements à l'extérieur du maillage, par extrapolation ou par utilisation de mesures de mouvement, le champ de déplacements à l'extérieur du maillage est considéré comme uniforme, et de valeur constante, par exemple un vecteur de déplacement nul.

A la suite de cette étape, on dispose d'un champ de déplacements $D_k$ de dimension (2, Nx, Ny). A chaque point $(x,y)$ considéré, on établi un champ de déplacements $D_k^{(X)}$ selon l'axe X, de dimension (Nx,Ny), et un hamp de déplacements $D_k^{(Y)}$ selon l'axe Y, de dimension (Nx,Ny).

Etape 140 : Estimation de l'image de reconstruction $\hat{I}_k$

A partir de l'image de reconstruction $I_{k-1}(x,y)$ résultant d'une itération précédente, ou résultant de l'initialisation, et connaissant le champ de déplacements $D_k$, on estime une image de reconstruction $\hat{I}_k$, en prenant en compte la fonction de recalage. Cette étape constitue un élément important de l'invention.

Cette étape est basée sur l'hypothèse que le déplacement de la position des sources irradiantes, sur l'image de reconstruction $I_k$, entre les instants $k - 1$ et $k$, est obtenu en considérant le champ de déplacements $D_k$ mesuré entre deux images visibles successives respectivement associées aux instants $k - 1$ et $k$, les images visibles $V_{k-1}$ et $V_k$ étant respectivement associées aux images gamma $M_{k-1}$ et $M_k$.

Ainsi :

$$\hat{I}_k = (B * I_{k-1})^{1-\alpha} \times I_{k-1} \circ \mathcal{g}(D_k)^{\alpha} \quad (4)$$

où :

× est un opérateur de multiplication terme à terme (produit de Hadamard)

$I_{k-1}$ correspond à l'image de reconstruction résultant d'une itération précédente. Il s'agit d'une matrice, de même dimension qu'une image gamma $M_k$, et dont chaque point correspond à un taux d'émission, dans une bande spectrale donnée ou dans une combinaison de bandes spectrales, ou à une activité d'un isotope.

$B$ est un filtre permettant d'effectuer un lissage de l'image $I_{k-1}$. Il peut s'agir d'un filtre passe bas, par exemple un filtre gaussien. La convolution de l'image $I_{k-1}$ par le filtre de lissage $B$ permet d'effectuer un effet de flou sur l'image de reconstruction $I_{k-1}$. Le recours à un tel filtre permet d'établir un a priori sur la position des sources irradiantes telle que décrite par l'image de reconstruction $I_{k-1}$. Selon une alternative, le filtrage peut être effectué selon l'expression :

$$\hat{I}_k = B * \left[ I_{k-1}{}^{1-\alpha} \times I_{k-1} \circ \mathscr{g}(D_k)^\alpha \right] \ (4')$$

$\mathscr{G}$ correspond à la fonction de recalage. $g(D_k)$ est une fonctionnelle prenant en compte déplacement dans le plan objet, en prenant en compte la fonction de recalage $\mathscr{G}$ entre la caméra visible et la caméra gamma.

$I_{k-1} \circ \mathscr{G}(D_k)$ traduit l'image de reconstruction $I_{k-1}$ après application du vecteur de déplacement recalé.

En chaque point $(x, y)$ du champ d'observation, $D_k$ permet de définir un déplacement $D_k^{(X)}(x, y)$ selon l'axe X et un déplacement $D_k^{(Y)}(x, y)$ selon l'axe Y. La fonctionnelle $\mathscr{G}(D_k)$ permet d'établir un déplacement, dans le plan objet, en fonction du déplacement $D_k$. Elle permet d'estimer des coordonnées $(x_k, y_k)$ à l'instant $k$ en fonction de coordonnées $(x_{k-1}, y_{k-1})$ à l'instant $k - 1$, de telle sorte que :

$$x_k = x_{k-1} + g_X \left[ D_k^{(X)}(x, y) \right] \quad (5.1)$$

$$y_k = y_{k-1} + g_Y \left[ D_k^{(Y)}(x, y) \right] \quad (5.2)$$

Où $g_X$ et $g_Y$ correspondent à des composantes de la fonction de recalage établies respectivement selon l'axe X et selon l'axe Y.

Ainsi, $\mathscr{G}(D_k)$ est une fonctionnelle permettant un passage entre $(x_{k-1}, y_{k-1})$ et $(x_k, y_k)$ tel qu'explicité par les expressions (5.1) et (5.2). Il s'agit d'un changement de variables.

L'exposant $\alpha$ est strictement positif est strictement inférieur à 1 : $0 < \alpha \le 1$. L'exposant a permet une prise en compte d'un effet mémoire : plus $\alpha$ se rapproche de 1, plus on conserve la mémoire des acquisitions d'images gamma précédentes.

Le champ de déplacements $D_k$ est établi par l'observation d'un déplacement d'objets entre les images visibles $V_{k-1}$ et $V_k$, dans le champ d'observation de la caméra visible. Ainsi, le déplacement des sources irradiantes, sur les deux images de reconstruction $I_{k-1}$ et $\hat{I}_k$ est basé sur la détection d'objets, formant des points remarquables dans les images visibles $V_{k-1}$ et $V_k$, leur appariement, et le calcul de leurs déplacements respectifs entre les deux images visibles. Leur déplacement permet d'établir un champ de déplacements $D_k$ dans l'image visible, qui est affecté à l'image gamma, après application de la fonction de recalage.

Aussi, à l'application de la fonction de recalage près, de déplacement des sources d'irradiation est considéré comme pouvant être établi à partir du champ de déplacements calculé sur la base des images visibles. Un point important de l'invention est le fait que les mouvements des objets observés sur l'image visible sont considérés comme représentatifs des mouvements des sources gamma, ces dernières étant représentées sur l'image de reconstruction. Cela limite significativement la complexité des calculs ainsi que les ressources nécessaires pour effectue les calculs. Le procédé ne nécessite pas une mise en œuvre de techniques complexes, telles que la triangulation, ou d'estimation d'un positionnement tridimensionnel des sources irradiantes dans l'environnement.

Etape 150 : Estimation de l'image gamma $\hat{M}_k$ à l'instant $k$

L'image de reconstruction estimée $\hat{I}_k$, résultant de l'étape 140, est projetée dans le plan de détection, de façon à estimer l'image gamma $\hat{M}_k$ correspondant à l'itération $k$. L'image gamma $\hat{M}_k$ est estimée selon l'expression

$$\hat{M}_k(u, v) = F\left[ \hat{I}_k(x, y) \right] \ (6)$$

Où F correspond à un opérateur de projection entre le plan objet $P_o$ et le plan de détection P.

Etape 160 : Détermination d'un terme d'erreur.

Au cours de cette étape, à partir de l'image $M_k$ acquise à l'instant $k$, et résultant de l'étape 120 et de l'estimation $\hat{M}_k$ résultant de l'étape 140, on calcule l'erreur de mesure :

$$U_k = \frac{M_k}{\hat{M}_k} \ (7)$$

.

Etape 170 : Rétropropagation de l'erreur

Le terme d'erreur $U_k$ est rétropropagé dans le plan objet selon l'expression :

$$W_k(x, y) = F^-[U_k(u, v)] \quad (8)$$

Etape 180 : Mise à jour de l'image de reconstruction

Au cours de cette étape, l'image de reconstruction, correspondant à l'instant $k$, est mise à jour selon l'expression,

$$I_k = I_{k-1} \times W_k \quad (9)$$

$\times$ désigne le produit terme à terme.

Selon un mode de réalisation, on prend en compte une fonction non linéaire h, de telle sorte que

$$I_k = I_{k-1} \times h(W_k) \quad (10)$$

Ainsi, à chaque instant de mesure $k$, l'image de reconstruction $I_k$ est mise à jour en prenant en compte l'image gamma $M_k$ acquise à l'instant de mesure. La prise en compte de l'image gamma $M_k$ est effectuée par le biais de l'erreur rétropropagée $W_k$.

L'image de reconstruction $I_k$ est définie dans une intersection entre le plan objet $P_o$ et le champ d'observation $\Omega_k$ à l'instant de mesure $k$. De préférence, l'image de reconstruction $I_k$ n'est pas définie à l'extérieur du champ d'observation $\Omega_k$ à l'instant de mesure $k$. Cela permet de simplifier le processus de reconstruction, en ne prenant pas en compte des sources d'irradiation potentiellement présentes en dehors du champ d'observation $\Omega_k$. L'image de reconstruction ne comporte alors que des positions de sources irradiantes présentes dans le champ d'observation à l'instant de mesure $k$, sur la base d'images gamma $M_k$ acquises à l'instant de mesure ou à des images gamma acquises à des instants antérieurs, précédent l'instant de mesure. A chaque déplacement du dispositif de mesure 1, l'étendue spatiale de l'image de reconstruction est modifiée, de façon à se limiter à l'intersection entre le plan objet $P_o$ et le champ d'observation $\Omega_k$ à l'instant de mesure $k$.

L'image de reconstruction peut avoir une dimension inférieure ou égale à la dimension de chaque image gamma.

L'image de reconstruction $I_k$ est dotée d'un certain niveau de transparence, puis est éventuellement superposée sur l'image visible $V_k$, la superposition étant réalisée ne prenant en compte la fonction de recalage. Cela permet d'effectuer une correspondance entre les objets observés sur l'image visible et les sources irradiantes représentées dans l'image de reconstruction.

Etape 190 :

Réitération des étapes 130 à 190, en incrémentant l'indice d'itération $k$.

Selon un mode de réalisation, le dispositif comporte un capteur de mouvement 5, par exemple de type centrale inertielle. Le capteur de mouvement comporte un gyromètre, éventuellement complété par un accéléromètre et/ou un magnétomètre). D'une façon générale, le capteur de mouvement permet d'obtenir un mouvement angulaire entre deux instants d'acquisition successifs. L'information résultant de la centrale inertielle peut être prise en compte dans l'étape 130, de façon à limiter les risques d'erreur dans l'appariement des points remarquables. Elle peut également être utilisée pour compléter le champ de déplacements $D_k$ en dehors du maillage formé entre les points remarquables appariés. Le mouvement de translation de la caméra et le positionnement des objets peut également être estimé par d'autres dispositif de type LIDAR, système de localisation GPS, balises fixes radiofréquentielles ou centrale inertielle de qualité «navigation».

Selon un mode de réalisation, la gamma caméra dispose d'une fonction spectrométrique. Les étapes 100 à 180 sont mises en oeuvre simultanément, dans chaque bande d'énergie $\Delta E$. On peut alors obtenir autant d'images de reconstruction que de bandes d'énergie considérées. Les étapes 100 à 180 peuvent également être mis en oeuvre sur la base d'images gamma respectivement acquises dans différentes bandes d'énergie, puis combinées, comme précédemment décrit, de façon à tenir compte d'un spectre d'émission d'un isotope radioactif préalablement sélectionné. Dans ce cas, l'image de reconstruction est assimilable à une distribution spatiale de l'activité de l'isotope radioactif, dans le champ d'observation. L'invention pourra être mise en oeuvre sur différentes installations nucléaires, ou, plus généralement, pour des opérations de recherche et de caractérisation de sources radioactives.

**Revendications**

1. Procédé de formation d'une image de reconstruction ($I_k$), l'image de reconstruction montrant une position ($x$, $y$) de sources irradiantes ($10_a$, $10_b$) dans un champ d'observation ($\Omega$), le procédé mettant en œuvre un dispositif (1) comportant une gamma caméra (2), reliée à une caméra visible (3), le dispositif étant tel que :

   - la gamma caméra et la caméra visible définissent le champ d'observation ($\Omega$);
   - la caméra visible (3) est configurée pour former une image visible ($V_k$) du champ d'observation ($\Omega$);
   - la gamma caméra comporte des pixels, configurés pour détecter un rayonnement électromagnétique ionisant généré par une source irradiante éventuellement présente dans le champ d'observation, les pixels s'étendant selon un plan de détection (P) ;

- la gamma caméra est configurée pour former une image gamma ($M_k$), permettant d'estimer une position de sources irradiantes, dont le rayonnement est détecté par des pixels, dans le champ d'observation ;

le procédé étant **caractérisé en ce qu'**il comporte les étapes itératives suivantes :

a) à un instant de mesure initial ($k$=1), acquisition d'une image gamma initiale ($M_1$) par la gamma caméra et acquisition d'une image visible initiale ($V_1$) par la caméra visible;

b) à partir de l'image gamma initiale et de l'image visible initiale, initialisation de l'image de reconstruction ($I_1$);

c) acquisition d'une image gamma ($M_k$) par la gamma caméra et acquisition d'une image visible ($V_k$) par la caméra visible à un instant de mesure ($k$);

d) comparaison de l'image visible ($V_k$) à l'instant de mesure avec une image visible ($V_{k-1}$) à un instant antérieur (k-1), l'instant antérieur étant l'instant de mesure initial ou un précédent instant de mesure, puis, en fonction de la comparaison, estimation d'un champ de déplacements ($D_k$) entre les images visibles respectivement acquises à l'instant antérieur et à l'instant de mesure ;

e) mise à jour de l'image de reconstruction ($I_k$), en fonction :

- d'une image de reconstruction ($I_{k-1}$) établie à l'instant antérieur;
- du champ de déplacements ($D_k$) résultant de l'étape d) ;
- et de l'image gamma ($M_k$) acquise à l'instant de mesure ;

f) éventuellement superposition de l'image de reconstruction, ou d'une partie de l'image de reconstruction, et de l'image visible ;

g) réitération des étapes c) à f) en incrémentant l'instant de mesure, jusqu'à un arrêt des itérations ;

le dispositif étant déplacé entre au moins deux instants de mesure, de telle sorte qu'à chaque instant de mesure (k) correspond un champ d'observation ($\Omega_k$).

2. Procédé selon la revendication 1, dans lequel à chaque instant de mesure, chaque pixel ayant détecté un rayonnement issu d'une source irradiante est associé à une position ($x, y$) dans une surface objet ($P_o$), s'étendant face au plan de détection, l'image de reconstruction ($I_k$) correspondant à une distribution spatiale des sources irradiantes à l'intérieur du champ d'observation ($\Omega_k$) à l'instant de mesure (k) sur la surface objet.

3. Procédé selon la revendication 2, dans lequel la surface objet est un plan objet, s'étendant parallèlement au plan de détection (P), chaque position ($x, y$) étant coplanaire.

4. Procédé selon l'une quelconque des revendications 2 ou 3, dans lequel l'image de reconstruction ($I_k$), à l'instant de mesure, n'est définie que dans une intersection entre le champ d'observation ($\Omega_k$) à l'instant de mesure (k) et la surface objet (Po).

5. Procédé selon l'une quelconque des revendications précédentes, dans lequel l'étape e) lors de chaque instant de mesure, comporte

- i) estimation d'une image de reconstruction ($\hat{I}_k$), à l'instant de mesure, à partir de l'image de reconstruction ($I_{k-1}$) établie à l'instant antérieur et du champ de déplacements ($D_k$) résultant de l'étape d) ;
- ii) à partir de l'image de reconstruction estimée ($\hat{I}_k$), estimation de l'image gamma ($\hat{M}_k$) à l'instant de mesure ;
- iii) comparaison de l'image gamma ($\hat{M}_k$) estimée à l'instant de mesure et l'image gamma ($M_k$) acquise à l'instant de mesure ;
- iv) en fonction de la comparaison, mise à jour de l'image de reconstruction ($I_k$) à l'instant de mesure.

6. Procédé selon l'une quelconque des revendications précédentes, comportant une détermination d'une fonction de recalage (g), représentative d'un décalage spatial entre la gamma caméra (2) et la caméra visible (3), la fonction de recalage étant utilisée dans l'étape e).

7. Procédé selon l'une quelconque des revendications précédentes, dans lequel l'étape d) comporte une sélection de points remarquables sur les images visibles acquises respectivement à l'instant antérieur et à l'instant de mesure, le champ de déplacements ($D_k$) comportant un déplacement bidimensionnel des points remarquables sélectionnés.

8. Procédé selon la revendication 7, dans lequel les points remarquables sont considérés comme appartenant à une même surface.

9. Procédé selon l'une quelconque des revendications précédentes, dans lequel l'étape d) comporte :

- une extraction de premiers points remarquables de l'image visible ($V_k$) acquise à l'instant de mesure ;
- une extraction de deuxièmes points remarquables de l'image visible ($V_{k-1}$) acquise à l'instant antérieur ;
- un appariement de premiers points remarquables et des deuxièmes points remarquables, de façon à former des couples de points appariés, chaque couple étant formé d'un premier point remarquable et d'un deuxième point remarquable ;
- pour chaque couple de points appariés, détermination d'un déplacement ($d_k(x, y)$);
- obtention du champ de déplacements ($D_k$) à partir des déplacements déterminés pour chaque couple de points appariés.

10. Procédé selon la revendication 9, comportant :

- une élaboration d'un premier maillage du champ d'observation, à l'instant de mesure, à l'aide de premiers points remarquables, ces derniers formant des premiers sommets du premier maillage;
- une élaboration d'un deuxième maillage du champ d'observation, à l'instant antérieur à l'aide de deuxièmes points remarquables, ces derniers formant des deuxièmes sommets du deuxième maillage ;
- en fonction des déplacements déterminés pour différents couples de points remarquable, détermination, par interpolation, de déplacements en des points appartenant au premier maillage et au deuxième maillage.
- détermination du champ de déplacements ($D_k$) à partir du déplacement de chaque sommet apparié et des déplacements interpolés.

11. Procédé selon l'une quelconque des revendications précédentes, dans lequel :

- le dispositif est couplé à un capteur de mouvement, de façon à estimer un mouvement du dispositif entre deux instants successifs ;
- l'étape d) prend en compte le mouvement estimé pour estimer ou valider le champ de déplacements.

12. Procédé selon l'une quelconque des revendications précédentes, dans lequel la gamma caméra est configurée pour acquérir, lors des étapes a) et c) des images gamma simultanément dans différentes bandes d'énergies, les étapes b) et d) à f) étant mises en oeuvre dans chaque bande d'énergie respectivement, de façon à obtenir, à chaque instant de mesure, une image de reconstruction dans différentes bandes d'énergie.

13. Procédé selon l'une quelconque des revendications précédentes, dans lequel la gamma caméra est configurée pour acquérir, lors des étapes a) et c) des images gamma simultanément dans différentes bandes d'énergies, le procédé comportant une combinaison linéaire de différentes images gamma respectivement acquises, au même instant de mesure, dans différentes bandes d'énergie, de façon à obtenir une image gamma combinée, les étapes b) et d) à f) étant mises en oeuvre à partir d'une image gamma combinée formée à chaque instant de mesure.

14. Procédé selon la revendication 13, dans lequel une image combinée est formée par une somme pondérée d'images gamma acquises dans différentes énergies, la somme pondérée utilisant des facteurs de pondération, les facteurs de pondération étant déterminé à partir d'un spectre d'émission d'un isotope radioactif, de telle sorte que chaque image de reconstruction est représentative d'une distribution spatiale de l'activité de l'isotope dans le champ d'observation correspondant à l'instant de mesure.

15. Dispositif (1) comportant :

- une gamma caméra (2), comportant des pixels, définissant un champ d'observation gamma ($\Omega_2$), la gamma caméra étant configurée pour déterminer une position de sources irradiantes X ou gamma dans le champ d'observation gamma ($\Omega_2$);
- une caméra visible (3), permettant de former une image visible d'un champ d'observation visible ($\Omega_3$);
- l'intersection du champ d'observation gamma et du champ d'observation visible étant non nulle, et définissant un champ d'observation ($\Omega$) du dispositif;
- une unité de traitement (4), configurée pour recevoir, en différents instants de mesure ($k$):

• une image gamma, formée par la gamma caméra ;
• une image visible formée par la caméra visible; le dispositif étant **caractérisé en ce que** l'unité de traitement est configurée pour mettre en oeuvre les étapes b) ainsi que d) à g) d'un procédé selon l'une quelconque des revendications précédentes.

**Patentansprüche**

1. Verfahren zur Bildung eines Rekonstruktionsbildes ($I_k$), wobei das Rekonstruktionsbild eine Position (x, y) strahlender Quellen ($10_a$, $10_b$) in einem Betrachtungsbereich ($\Omega$) zeigt, wobei das Verfahren eine Vorrichtung (1) einsetzt, die eine Gammakamera (2) umfasst, die mit einer Kamera im sichtbaren Bereich (3) verbunden ist, wobei die Vorrichtung dergestalt ist, dass:

- die Gammakamera und die Kamera im sichtbaren Bereich den Betrachtungsbereich ($\Omega$) definieren;
- die Kamera im sichtbaren Bereich (3) dazu ausgestaltet ist, ein Bild im sichtbaren Bereich ($V_k$) des Betrachtungsbereichs ($\Omega$) zu bilden;
- die Gammakamera Pixel umfasst, die dazu ausgestaltet sind, eine ionisierende elektromagnetische Strahlung zu detektieren, die von einer strahlenden Quelle erzeugt wird, die sich gegebenenfalls im Betrachtungsbereich befindet, wobei sich die Pixel entlang einer Detektionsebene (P) erstrecken;
- die Gammakamera dazu ausgestaltet ist, ein Gammabild ($M_k$) zu bilden, das es ermöglicht, eine Position strahlender Quellen, deren Strahlung von Pixeln detektiert wird, im Betrachtungsbereich zu schätzen;

wobei das Verfahren **dadurch gekennzeichnet ist, dass** es die folgenden iterativen Schritte umfasst:

a) zu einem anfänglichen Messzeitpunkt (k=1), Erfassen eines anfänglichen Gammabildes ($M_1$) durch die Gammakamera und Erfassen eines anfänglichen Bildes im sichtbaren Bereich ($V_1$) durch die Kamera im sichtbaren Bereich;
b) ausgehend von dem anfänglichen Gammabild und dem anfänglichen Bild im sichtbaren Bereich, Initialisieren des Rekonstruktionsbildes ($I_1$);
c) Erfassen eines Gammabildes ($M_k$) durch die Gammakamera und Erfassen eines Bildes im sichtbaren Bereich ($V_k$) durch die Kamera im sichtbaren Bereich zu einem Messzeitpunkt (k);
d) Vergleichen des Bildes im sichtbaren Bereich ($V_k$) zum Messzeitpunkt mit einem Bild im sichtbaren Bereich ($V_{k-1}$) zu einem früheren Zeitpunkt (k-1), wobei der frühere Zeitpunkt der anfängliche Messzeitpunkt oder ein vorhergehender Messzeitpunkt ist, dann, in Abhängigkeit von dem Vergleich, Schätzen eines Verlagerungsbereichs ($D_k$) zwischen den zu dem früheren Zeitpunkt beziehungsweise zu dem Messzeitpunkt erfassten Bildern im sichtbaren Bereich;
e) Aktualisieren des Rekonstruktionsbildes ($I_k$) in Abhängigkeit:

- von einem Rekonstruktionsbild ($I_{k-1}$), das zu dem früheren Zeitpunkt erstellt wurde;
- von dem Verlagerungsbereich ($D_k$), der aus Schritt d) resultiert;
- und von dem Gammabild ($M_k$), das zu dem Messzeitpunkt erfasst wurde;

f) gegebenenfalls Überlagern des Rekonstruktionsbildes oder eines Teils des Rekonstruktionsbildes und des Bildes im sichtbaren Bereich;
g) Reiteration der Schritte c) bis f) unter Inkrementierung des Messzeitpunkts bis zu einem Stopp der Iterationen;

wobei die Vorrichtung zwischen mindestens zwei Messzeitpunkten verlagert wird, so dass jeder Messzeitpunkt (k) einem Betrachtungsbereich ($\Omega_k$) entspricht.

2. Verfahren nach Anspruch 1, bei dem zu jedem Messzeitpunkt jeder Pixel, der eine aus einer strahlenden Quelle stammende Strahlung detektiert hat, einer Position (x, y) in einer Objektfläche ($P_o$) zugeordnet wird, die sich gegenüber der Detektionsebene erstreckt, wobei das Rekonstruktionsbild ($I_k$) einer räumlichen Verteilung der strahlenden Quellen innerhalb des Betrachtungsbereichs ($\Omega_k$) zum Messzeitpunkt (k) auf der Objektfläche entspricht.

3. Verfahren nach Anspruch 2, bei dem die Objektfläche eine Objektebene ist, die sich parallel zur Detektionsebene (P) erstreckt, wobei jede Position (x, y) komplanar ist.

4. Verfahren nach einem der Ansprüche 2 oder 3, bei dem das Rekonstruktionsbild ($I_k$) zum Messzeitpunkt nur in einer Schnittmenge zwischen dem Betrachtungsbereich ($\Omega_k$) zum Messzeitpunkt (k) und der Objektfläche ($P_o$) definiert wird.

5. Verfahren nach einem der vorhergehenden Ansprüche, wobei der Schritt e) bei jedem Messzeitpunkt umfasst

- i) Schätzen eines Rekonstruktionsbildes ($\hat{I}_k$), zum Messzeitpunkt, ausgehend von dem zum früheren Zeitpunkt erstellten Rekonstruktionsbild ($I_{k-1}$) und von dem aus Schritt d) resultierenden Verlagerungsbereich ($D_k$);
- ii) ausgehend von dem geschätzten Rekonstruktionsbild ($\hat{I}_k$), Schätzen des Gammabildes ($\hat{M}_k$) zum Messzeitpunkt;
- iii) Vergleichen des zum Messzeitpunkt geschätzten Gammabildes ($\hat{M}_k$) und des zum Messzeitpunkt erfassten Gammabildes ($M_k$);
- iv) in Abhängigkeit von dem Vergleich, Aktualisieren des Rekonstruktionsbildes ($I_k$) zum Messzeitpunkt.

6. Verfahren nach einem der vorhergehenden Ansprüche, das eine Bestimmung einer Korrekturfunktion (g) umfasst, die für einen räumlichen Versatz zwischen der Gammakamera (2) und der Kamera im sichtbaren Bereich (3) repräsentativ ist, wobei die Korrekturfunktion im Schritt e) verwendet wird.

7. Verfahren nach einem der vorhergehenden Ansprüche, bei dem der Schritt d) ein Auswählen von Kennpunkten auf den Bildern im sichtbaren Bereich, die zum früheren Zeitpunkt beziehungsweise zum Messzeitpunkt erfasst wurden, umfasst, wobei der Verlagerungsbereich ($D_k$) eine zweidimensionale Verlagerung der ausgewählten Kennpunkte umfasst.

8. Verfahren nach Anspruch 7, bei dem die Kennpunkte als zu derselben Fläche gehörend betrachtet werden.

9. Verfahren nach einem der vorhergehenden Ansprüche, bei dem der Schritt d) umfasst:

- eine Extraktion von ersten Kennpunkten des Bildes im sichtbaren Bereich ($V_k$), das zum Messzeitpunkt erfasst wurde;
- eine Extraktion von zweiten Kennpunkten des Bildes im sichtbaren Bereich ($V_{k-1}$), das zum früheren Zeitpunkt erfasst wurde;
- ein Abgleichen von ersten Kennpunkten und zweiten Kennpunkten, so dass Paare aus abgeglichenen Punkten gebildet werden, wobei jedes Paar aus einem ersten Kennpunkt und aus einem ersten Kennpunkt gebildet wird;
- für jedes Paar aus abgeglichenen Punkten, Bestimmen einer Verlagerung ($d_k(x, y)$);
- Erhalten des Verlagerungsbereichs ($D_k$) ausgehend von den für jedes Paar aus abgeglichenen Punkten bestimmten Verlagerungen.

10. Verfahren nach Anspruch 9, umfassend:

- ein Erarbeiten eines ersten Netzes des Betrachtungsbereichs, zum Messzeitpunkt, mithilfe von ersten Kennpunkten, wobei diese Letzteren erste Eckpunkte des ersten Netzes bilden;
- ein Erarbeiten eines zweiten Netzes des Betrachtungsbereichs, zum früheren Zeitpunkt, mithilfe von zweiten Kennpunkten, wobei diese Letzteren zweite Eckpunkte des zweiten Netzes bilden;
- in Abhängigkeit von den für verschiedene Paare aus Kennpunkten bestimmten Verlagerungen, Bestimmen, durch Interpolation, von Verlagerungen an Punkten, die dem ersten Netz und dem zweiten Netz angehören;
- Bestimmen des Verlagerungsbereichs ($D_k$) ausgehend von der Verlagerung jedes abgeglichen Eckpunkts und von den interpolierten Verlagerungen.

11. Verfahren nach einem der vorhergehenden Ansprüche, bei dem:

- die Vorrichtung mit einem Bewegungssensor gekoppelt ist, so dass eine Bewegung der Vorrichtung zwischen zwei aufeinanderfolgenden Zeitpunkten geschätzt wird;
- der Schritt d) die geschätzte Bewegung berücksichtigt, um den Verlagerungsbereich zu schätzen oder zu validieren.

12. Verfahren nach einem der vorhergehenden Ansprüche, bei dem die Gammakamera dazu ausgestaltet ist, bei den Schritten a) und c) Gammabilder gleichzeitig in verschiedenen Energiebändern zu erfassen, wobei die Schritte b) und d) bis f) in jedem Energieband jeweils so ausgeführt werden, dass zu jedem Messzeitpunkt ein Rekonstruktionsbild in verschiedenen Energiebändern erhalten wird.

13. Verfahren nach einem der vorhergehenden Ansprüche, bei dem die Gammakamera dazu ausgestaltet ist, bei den Schritten a) und c) Gammabilder gleichzeitig in verschiedenen Energiebändern zu erfassen, wobei das Verfahren eine lineare Kombination von verschiedenen Gammabildern umfasst, die jeweils zum selben Messzeitpunkt in verschiedenen Energiebändern erfasst wurden, so dass ein kombiniertes Gammabild erhalten wird, wobei die Schritte b) und d) bis f) ausgehend von einem zu jedem Messzeitpunkt gebildeten kombinierten Gammabild ausgeführt werden.

14. Verfahren nach Anspruch 13, bei dem ein kombiniertes Bild durch eine gewichtete Summe von in verschiedenen Energien erfassten Gammabildern gebildet wird, wobei die gewichtete Summe Gewichtungsfaktoren verwendet, wobei die Gewichtungsfaktoren ausgehend von einem Emissionsspektrum eines radioaktiven Isotops bestimmt werden, so dass jedes Rekonstruktionsbild für eine räumliche Verteilung der Aktivität des Isotops in dem dem Messzeitpunkt entsprechenden Betrachtungsbereich repräsentativ ist.

15. Vorrichtung (1), umfassend:

- eine Gammakamera (2), die Pixel umfasst, die einen Gamma-Betrachtungsbereich ($\Omega_2$) definieren, wobei die Gammakamera dazu ausgestaltet ist, eine Position strahlender X- oder Gamma-Quellen im Gamma-Betrachtungsbereich ($\Omega_2$) zu bestimmen;
- eine Kamera im sichtbaren Bereich (3), die es ermöglicht, ein Bild im sichtbaren Bereich eines Betrachtungsbereichs im sichtbaren Bereich ($\Omega_3$) zu bilden;
- wobei die Schnittmenge des Gamma-Betrachtungsbereichs und des Betragungsbereichs im sichtbaren Bereich ungleich null ist und einen Betrachtungsbereich ($\Omega$) der Vorrichtung definiert;

- eine Verarbeitungseinheit (4), die dazu ausgestaltet ist, zu verschiedenen Messzeitpunkten (k) zu empfangen:

> • ein Gammabild, das durch die Gammakamera gebildet wird;
> • ein Bild im sichtbaren Bereich, das durch die Kamera im sichtbaren Bereich gebildet wird; wobei die Vorrichtung **dadurch gekennzeichnet ist, dass** die Verarbeitungseinheit dazu ausgestaltet ist, die Schritte b) sowie d) bis g) eines Verfahrens nach einem der vorhergehenden Ansprüche auszuführen.

## Claims

1. Method for forming a reconstruction image ($I_k$), the reconstruction image showing a position ($x, y$) of irradiating sources ($10_a$, $10_b$) in an observation field ($\Omega$), the method employing a device (1) comprising a gamma camera (2) joined to a visible camera (3), the device being such that:

> - the gamma camera and the visible camera define the observation field ($\Omega$);
> - the visible camera (3) is configured to form a visible image ($V_k$) of the observation field ($\Omega$);
> - the gamma camera comprises pixels, which are configured to detect ionizing electromagnetic radiation generated by an irradiating source potentially present in the observation field, the pixels lying in a detection plane (P);
> - the gamma camera is configured to form a gamma image ($M_k$), allowing a position, in the field of observation, of irradiating sources, the radiation of which is detected by the pixels, to be estimated;

the method being **characterized in that** it comprises the following iterative steps:

> a) at an initial measurement time (k=1), acquiring an initial gamma image ($M_1$) with the gamma camera and acquiring an initial visible image ($V_1$) with the visible camera;
> b) on the basis of the initial gamma image and of the initial visible image, initializing the reconstruction image ($I_1$);
> c) acquiring a gamma image ($M_k$) with the gamma camera and acquiring a visible image ($V_k$) with the visible camera, at a measurement time ($k$);
> d) comparing the visible image ($V_k$) at the measurement time with a visible image ($V_{k-1}$) at a prior time ($k$-1), the prior time being the initial measurement time or a preceding measurement time, then, depending on the comparison, estimating a field ($D_k$) of movement between the visible images acquired at the prior time and the measurement time, respectively;
e) updating the reconstruction image ($I_k$), depending:

> - on a reconstruction image ($I_{k-1}$) established at the prior time;
> - on the movement field ($D_k$) resulting from step d);
> - and on the gamma image ($M_k$) acquired at the measurement time;

f) optionally superposing the reconstruction image, or a portion of the reconstruction image, and the visible image;
g) reiterating steps c) to f) while incrementing the measurement time, until the iterations are stopped;

the device being moved between at least two measurement times, such that one observation field ($\Omega_k$) corresponds to each measurement time ($k$).

2. Method according to Claim 1, wherein, at each measurement time, each pixel having detected radiation generated by an irradiating source is associated with a position ($x, y$) on an object surface (Po) lying facing the detection plane, the reconstruction image ($I_k$) corresponding to a spatial distribution of the irradiating sources inside the observation field ($\Omega_k$) at the measurement time (k) over the object surface.

3. Method according to Claim 2, wherein the object surface is an object plane lying parallel to the detection plane (P), each position ($x, y$) being coplanar.

4. Method according to either one of Claims 2 and 3, wherein the reconstruction image ($I_k$), at the measurement time, is defined only in an intersection between the observation field ($\Omega_k$) at the measurement time ($k$) and the object surface (Po).

5. Method according to any one of the preceding claims, wherein step e) at each measurement time comprises

> - i) estimating a reconstruction image ($\hat{I}_k$), at the measurement time, on the basis of the reconstruction image ($I_{k-1}$) established at the prior time and of the movement field ($D_k$) obtained in step d);
> - ii) on the basis of the estimated reconstruction image ($\hat{I}_k$), estimating the gamma image ($\hat{M}_k$) at the measurement time;
> - iii) comparing the gamma image ($\hat{M}_k$) estimated

at the measurement time and the gamma image ($M_k$) acquired at the measurement time;
- iv) depending on the comparison, updating the reconstruction image ($I_k$) at the measurement time.

6. Method according to any one of the preceding claims, comprising determining a registration function (g) representative of a spatial offset between the gamma camera (2) and the visible camera (3), the registration function being used in step e).

7. Method according to any one of the preceding claims, wherein step d) comprises selecting noteworthy points in the visible images acquired at the prior time and at the measurement time, respectively, the movement field ($D_k$) comprising a two-dimensional movement of the selected noteworthy points.

8. Method according to Claim 7, wherein the noteworthy points are considered to belong to the same surface.

9. Method according to any one of the preceding claims, wherein step d) comprises:

- extracting first noteworthy points from the visible image ($V_k$) acquired at the measurement time;
- extracting second noteworthy points from the visible image ($V_{k-1}$) acquired at the prior time;
- matching first noteworthy points and second noteworthy points, so as to form pairs of matched points, each pair being formed from a first noteworthy point and from a second noteworthy point;
- for each pair of matched points, determining a movement ($d_k(x, y)$);
- obtaining the movement field ($D_k$) on the basis of the movements determined for each pair of matched points.

10. Method according to Claim 9, comprising:

- generating a first mesh of the observation field, at the measurement time, using first noteworthy points, the latter forming first vertices of the first mesh;
- generating a second mesh of the observation field, at the prior time, using second noteworthy points, the latter forming second vertices of the second mesh;
- depending on the movements determined for various pairs of noteworthy points, determining, by interpolation, movements at points belonging to the first mesh and to the second mesh;
- determining the movement field ($D_k$) on the basis of the movement of each matched vertex and of the interpolated movements.

11. Method according to any one of the preceding claims, wherein:

- the device is coupled to a movement sensor, so as to estimate a movement of the device between two successive times;
- step d) takes into account the estimated movement to estimate or validate the movement field.

12. Method according to any one of the preceding claims, wherein the gamma camera is configured to simultaneously acquire, in steps a) and c), gamma images in various energy bands, steps b) and d) to f) being implemented for each energy band respectively, so as to obtain, at each measurement time, a reconstruction image in various energy bands.

13. Method according to any one of the preceding claims, wherein the gamma camera is configured to simultaneously acquire, in steps a) and c), gamma images in various energy bands, the method comprising a linear combination of various gamma images respectively acquired, at the same measurement time, in various energy bands, so as to obtain a combined gamma image, steps b) and d) to f) being carried out on the basis of a combined gamma image formed at each measurement time.

14. Method according to Claim 13, wherein a combined image is formed by a weighted sum of gamma images acquired at various energies, the weighted sum using weighting factors, the weighting factors being determined on the basis of an emission spectrum of a radioactive isotope, such that each reconstruction image is representative of a spatial distribution of the activity of the isotope in the observation field corresponding to the measurement time.

15. Device (1), comprising:

- a gamma camera (2), comprising pixels, defining a gamma observation field ($\Omega_2$), the gamma camera being configured to determine a position of sources of X-ray or gamma irradiation in the gamma observation field ($\Omega_2$);
- a visible camera (3), allowing a visible image of a visible observation field ($\Omega_3$) to be formed;
- the intersection of the gamma observation field and of the visible observation field being nonzero, and defining an observation field ($\Omega$) of the device;
- a processing unit (4), configured to receive, at various measurement times ($k$):

• a gamma image, formed by the gamma camera;

- a visible image formed by the visible camera; the device being **characterized in that** the processing unit is configured to carry out steps b) and d) to g) of a method according to any one of the preceding claims.

**Fig. 1A**

**Fig. 1B**

**Fig. 1C**

**Fig. 2A**

**Fig. 2B**

**Fig. 2C**

EP 3 809 164 B1

**Fig. 3**

$\widehat{M}_1 \longrightarrow$ 100

$\downarrow V_1, M_1$

110

$\downarrow I_1$

120

$\downarrow V_k, M_k$

$V_{k-1} \longrightarrow$ 130

$\downarrow D_k$

$I_{k-1} \longrightarrow$ 140

$\downarrow \hat{I}_k$

150

$\downarrow \widehat{M}_k$

160

$\downarrow W_k$

170

$\downarrow I_k$

180

$\downarrow$

190

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- A new compact gamma camera with super resolution capability and high sensitivity for monitoring sparse radioactive sources in large area. **CHEN SI et al.** 2013 IEEE NUCLEAR SCIENCE SYMPOSIUM AND MEDICAL IMAGING CONFERENCE (2013 NSS/MIC). IEEE, 27 Octobre 2013, 1-4